# EUROPEAN PATENT SPECIFICATION

(11) **EP 0 449 360 B1**
(45) Date of publication and mention of the grant of the patent: **08.02.1995**
(21) Application number: 91200632.7
(22) Date of filing: 21.03.1991
(51) Int. Cl.: C04B 28/04, C04B 38/00, C04B 18/08, C04B 18/16, C04B 14/02

(54) **Lightweight cement for high pressure applications**
Leichtzement für Hochdruckanwendungen
Ciment léger pour applications à haute pression

(30) Priority: 29.03.1990 US 502086
(43) Date of publication of application: 02.10.1991
(73) Proprietor: SOFITECH N.V., 2030 Antwerpen (BE); COMPAGNIE DES SERVICES DOWELL SCHLUMBERGER, F-92541 Montrouge Cédex (FR)
(72) Inventor: Seng Chan, Keng, Calgary, Alberta T2J 4B7 (CA); Cutler, Dennis, Calgary, Alberta T3B 5J8 (CA)
(74) Representative: Richebourg, Michel François

(56) References cited:
- US-A- 4 822 422
- US-A- 4 871 395

## Description

This invention relates to the art of well cementing and, more particularly, to a relatively lightweight cement (less than 1300 kilograms per cubic meter) for use in high pressure environments.

### Background of the Invention

In the art of well cementing, the use of a lightweight cement, that is a cement composition having a density of less than about 1300 kilograms per cubic meter, is not available for use in high pressure environments. Normal lightweight cement components such as microsilica and fly ash do not yield cement densities this low and still maintain an acceptable compressive strength of greater than 3.4 MPa (500 psi) at temperatures below 50^{o}C. Cements can only be formulated to achieve this low density by using a combination of microsilica and ceramic microspheres. The difficulty with using such microspheres in order to achieve a lightweight cement composition is that at pressures greater than 3000 psi, the microspheres are crushed, any gas present within the microspheres is similarly compressed by the high pressure and the density of the cement composition increases.

### Summary of the Invention

The present invention provides for a cement composition which achieves low density utilizing ceramic microspheres but, through the synergistic action of other cement components, avoids the crushing of the microspheres at pressures greater than 20.3 MPa (3000 psi) so that the lightweight nature of the composition is maintained.

In accordance with the invention, a lightweight cement composition comprises an aqueous hydratable cement composition, ceramic microspheres and a foaming surfactant.

Further in accordance with the invention, the above cementing composition further includes microsilica.

It is therefore an object of this invention to provide a lightweight cement which can be used in high pressure (greater than 20.3 MPa (3000 psi)) environments but maintain a density of less than about 1300 kilograms per cubic meter.

### Brief Description of the Drawings

These and other objects of the invention are accomplished through the manner and form of the present invention to be further described in conjunction with a description of preferred embodiments thereof and in conjunction with the accompanying drawing forming a part of this specification in which the sole figure graphically illustrates the effect the inclusion of microsilica on the compressive strength of the resultant cement formulated in accordance with the invention.

### Detailed Description of the Preferred Embodiments and the Drawing

The present invention will now be described in a more limited aspects of a preferred embodiment thereof including example formulations illustrating the advantages of the present invention. It will be understood that the invention shall not be limited to only those disclosed embodiments but have considerably broader applicability to the art.

It has been found that, surprisingly, the effects of high pressure in crushing of or ceramic microspheres in a cement composition with the resultant increase in cement density can be overcome by the inclusion of relatively small amounts of a foaming surfactant into the cement composition.

As used in this specification and the claims, the term "foaming surfactant" shall be taken to mean any surfactant which, when combined in an aqueous solution with a gas results in a relatively stable dual phase system wherein the continuous phase is water (including the surfactant) and the discontinuous phase is gas. Such surfactants include, but are not limited to anionic, cationic or nonionic compounds such as sulfonated alkoxylates, alkylquaternary amines, ethoxylated linear alcohols and the like. One particularly useful surfactant which has been found to be very effective in the compositions of the present invention comprises an ammonium fatty alcohol ether sulfate having 12 to 30 carbon atoms in the fatty alcohol chain. In accordance with the invention, the foaming surfactant is added to lightweight cement compositions in a range of about 1 liter to about 20 liters of 85% active foaming surfactant per metric ton of dry cement blend (about 0.05 to about 1 % by weight).

The lightweight cement compositions in which the surfactant of the present invention shows a synergistic effect including a hydratable cement such as Class G, Class H, Class A or Class C cements, ceramic microspheres having a particle size ranging from between about 40 and about 200 microns and having a specific gravity ranging from about 0.5 to about 0.9. Optionally, a preferred cement composition further includes microsilica having a particle size ranging from about .01 to about 1 micron present in the dry blend in amounts ranging from about to about 200 or more kilograms of microsilica per ton of dry blend cement. Also optionally, the cement blend may include a rheology control agent such as cellulosic polymer or a sodium salt of condensed polynapthalene sulfonate (sodium PNS) in a range of 0 to about 1 % by weight of cement.

### EXAMPLE I

A lightweight cement having a nominal density of 1200 kilograms per cubic meter was made up by blending 500 kilograms Class G cement, 125 kilograms microsilica, 375 kilograms ceramic microspheres, 0.75% by weight of cement sodium PNS and 9 liters per ton of dry blend an 82.5% active ammonium fatty alcohol ether sulfate foaming surfactant. This blend was mixed with 0.8 cubic meters of water. The results of testing of this composition is presented in the TABLE. Scanning electron micrograph review of samples subjected to 40.6 MPa (6000 psi) for forty-eight hours at 70^{o}C show that an estimated less than 1% of the ceramic microspheres were crushed, most spheres being intact and less than 10% showing any evidence of fracturing or crushing. Broken and cracked spheres appeared to have been produced by sample preparation.

### EXAMPLE II

A nominal 1100 kilogram per cubic meter cement composition was formulated including 400 kilograms of Class G cement, 100 kilograms of microsilica, 500 kilograms of ceramic microspheres and 9 liters of 82.5% active ammonium fatty alcohol ether sulfate foaming surfactant per ton of dry blend along with 1 cubic meter of water per ton. The results of testing on this material are presented in the following TABLE. Scanning electron micrograph review of samples subjected to 40.6 MPa (6000 psi) for forty-eight hours at 70^{o}C show that an estimated less than 1% of the ceramic microspheres were crushed, most spheres being intact and less than 10% showing any evidence of fracturing or crushing. Broken and cracked spheres appeared to have been produced by sample preparation.

**TABLE**

| HIGH PRESSURE LIGHTWEIGHT CEMENTS | | |
|---|---|---|
| | 1200 Kg/m3 | 1100 Kg/m3 |
| Free Water. ml | 0 | 0 |
| TY. Pa (63 C) | 12 | 6 |
| PV. cp (63 C) | 38 | 24 |
| TT. hrs (63 C) | 3.5 | 10 |
| CS.*psi (30 C) | 2.4 (350) | 0.9 (138) |
| CS.*psi (50 C) | 6.8 (1000) | 3.5 (525) |
| CS.*psi (70 C) | 10.4 (1537) | 6.5 (962) |

| Measured Density (Kg/m3) | | |
|---|---|---|
| Surface | 1180 | 989 |
| 10.2 MPa 1,500 psi | 1320 | 1214 |
| 40.6 MPa (6,000 psi) | 1347 | 1198 |

| Compressive Strength** MPa (psi) | | |
|---|---|---|
| Surface | 9.5 (1400) | 2.7 (400) |
| 10.2 MPa (1,500 psi) | 7.4 (1100) | 3.4 (500) |
| 40.6 MPa (6,000 psi) | 9.4 (1386) | 1.9 (275) |

| | | |
|---|---|---|
| *CS, Compressive Strength for 48 Hours | | |
| **CC, Compressive Strength for 48 Hours at 70^{o}C | | |

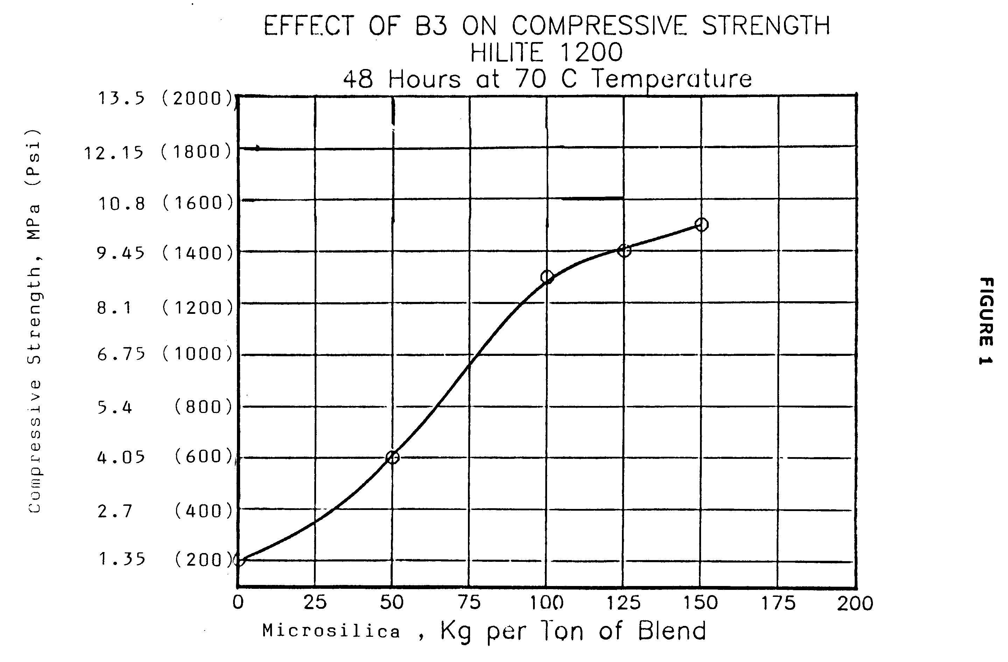

Figure 1 shows the effects of the inclusion of microsilica on the compressive strength of the resultant cement composition in a composition similar to Example I. A skilled artisan can thus select the desired compressive strength for the resultant lightweight cement by adding microsilica to the composition of Example I in accordance with the additive amounts shown in the graph of Figure 1.

While the invention has been described in the more limited aspects of preferred embodiments thereof, other embodiments have been suggested and still others will occur to those skilled in the art upon a reading and understanding of the foregoing specification. It is intended that all such embodiments be included within the scope of this invention as limited only by the appended claims.

## Claims

1. A lightweight cement composition for high pressure environments exceeding 20.3 MPa (3000 psi) comprising an aqueous slurry of a hydratable cement, ceramic microspheres and a foaming surfactant.

2. The cement composition as set forth in claim 1 further including microsilica.

3. The cement composition as set forth in claim 1 wherein said foaming surfactant is present in an amount ranging from about 0.05 to about 1% by weight of dry blend components.

4. The cement composition as set forth in claim 1 wherein said hydratable cement is selected from a group consisting of Class G cement, Class H cement, Class A cement and Class C cement.

5. The cement composition as set forth in claim 1 further including a rheology control agent.

6. The cement composition as set forth in claim 5 wherein the rheology control agent is selected from a group consisting of cellulosic polymers and the sodium salt of polynapthalene sulfonate.

7. The cement composition as set forth in claim 1 wherein the foaming surfactant comprises an ammonium fatty alcohol ether sulfate.

8. The cement composition as set forth in claim 1 wherein the foaming surfactant is selected from a group consisting of alkoxyquaternary ammines, ethoxylated linear alcohols and sulfonated alkoxylates.

9. The cement composition as set forth in claim 1 wherein said ceramic microspheres have a particle size ranging in size from about 40 to about 200 microns and a specific gravity ranging from about 0.5 to about 0.9 g/l.

10. The cement composition as set forth in claim 2 wherein the microsilica has a particle size ranging from about 0.1 to about 1 micron.

## Patentansprüche

1. Leichtzementzusammensetzung für Hochdruckumgebungen, welche 20.3 MPa (3000 psi) übersteigen, umfassend eine wässrige Aufschlämmung eines hydratisierbaren Zements, keramische Mikrokugeln und ein oberflächenaktives Schaummittel.

2. Zementzusammensetzung nach Anspruch 1, weiterhin umfassend Mikrosiliziumoxid.

3. Zementzusammensetzung nach Anspruch 1, wobei das oberflächenaktive Schaummittel in einer Menge im Bereich von ungefähr 0.05 bis ungefähr 1 Gew.-% der trockenen Gemischkomponenten vorhanden ist.

4. Zementzusammensetzung nach Anspruch 1, wobei der hydratisierbare Zement ausgewählt ist aus einer Gruppe bestehend aus Klasse G Zement, Klasse H Zement, Klasse A Zement und Klasse C Zement.

5. Zementzusammensetzung nach Anspruch 1, weiterhin umfassend ein Mittel, das die Rheologie reguliert.

6. Zementzusammensetzung nach Anspruch 5, wobei das die Rheologie regulierende Mittel ausgewählt ist aus einer Gruppe bestehend aus Cellulosepolymere und dem Natriumsalz von Polynaphtalinsulfonat.

7. Zementzusammensetzung nach Anspruch 1, wobei das oberflächenaktive Schaummittel ein Ammoniumfettalkoholethersulfat umfaßt.

8. Zementzusammensetzung nach Anspruch 1, wobei das oberflächenaktive Schaummittel ausgewählt ist aus einer Gruppe bestehend aus quaternären Alkoxyaminen, ethoxylierten linearen Alkoholen und sulfonierten Alkoxylaten.

9. Zementzusammensetzung nach Anspruch 1, wobei die keramischen Mikrokugeln eine Teilchengröße im Bereich von ungefähr 40 bis ungefähr 200 Mikrometer und ein spezifisches Gewicht im Bereich von ungefähr 0.5 bis ungefähr 0.9 g/l haben.

10. Zementzusammensetzung nach Anspruch 2, wobei das Mikrosiliziumoxid eine Teilchengröße im Bereich von ungefähr 0.1 bis ungefähr 1 Mikrometer hat.

## Revendications

1. Composition de ciment léger pour des environnements de hautes pressions, supérieures à 20,3 MPa (3000 psi), comprenant une bouillie aqueuse d'un ciment hydratable, des microsphères céramiques et un agent de surface moussant.

2. Composition de ciment selon la revendication 1, comprenant de plus de la silice micronisée.

3. Composition de ciment selon la revendication 1 où ledit agent de surface est contenu dans une quantité allant d'environ 0,05 à environ 1% en poids du mélange sec des composants.

4. Composition de ciment selon la revendication 1, où ledit ciment hydratable est pris dans le groupe comportant un ciment de la classe G, un ciment de la classe H, un ciment de la classe A et un ciment de la classe C.

5. Composition de ciment selon la revendication 1, comprenant de plus un agent de contrôle de rhéologie.

6. Composition de ciment selon la revendication 5, où l'agent de contrôle de rhéologie est pris dans un groupe comprenant des polymères cellulosiques et le sel de sodium de sulfonate de polynaphtalène.

7. Composition de ciment selon la revendication 1, où l'agent de surface moussant comprend un sulfate d'ammonium d'éther d'alcool gras.

8. Composition de ciment selon la revendication 1, où l'agent de surface moussant est pris dans un groupe comprenant des alcoxyamines quaternaires, des alcools éthoxylés linéaires et des alcoxylates sulfonatés.

9. Composition de ciment selon la revendication 1, où lesdites microsphères céramiques ont une granulométrie d'environ 40 à envirn 200 microns et un poids spécifique d'environ 0,5 à environ 0,9 g/l.

10. Composition de ciment selon la revendication 2, où la silice micronisée a une granulométrie d'environ 0,1 à environ 1 micron.
